# EUROPEAN PATENT APPLICATION

(11) **EP 4 742 443 A1**
(43) Date of publication of application: **13.05.2026**
(21) Application number: 24851073.7
(22) Date of filing: 08.08.2024
(51) Int. Cl.: H01Q 1/32, H01Q 1/22, H01Q 1/42, B60R 11/02

(54) **PILLAR ASSEMBLY AND VEHICLE**

(30) Priority: 08.08.2023 CN 202310992998
(71) Applicant: Fujian Fuyao Automotive Trim System Co., Ltd., Fuqing Fuzhou, Fujian 350300 (CN)
(72) Inventor: LIN, Chunshan, Fuzhou, Fujian 350300 (CN); CHEN, Xiaonan, Fuzhou, Fujian 350300 (CN); WANG, Li, Fuzhou, Fujian 350300 (CN); HE, Kai, Fuzhou, Fujian 350300 (CN); YANG, Renyi, Fuzhou, Fujian 350300 (CN); YANG, Weipeng, Fuzhou, Fujian 350300 (CN); TENG, Yu, Fuzhou, Fujian 350300 (CN)
(74) Representative: Mewburn Ellis LLP
(86) International application number: PCT/CN2024/110537
(87) International publication number: WO 2025/031428

(57) **Abstract**

A pillar assembly and a vehicle including the same are provided. A pillar assembly (20) includes an exterior trim panel (10), a Bluetooth antenna (20), a circuit board (30), and a protective shell (40). The protective shell (40) is mounted on an inner side of the exterior trim panel (10) and is disposed opposite to the exterior trim panel (10). The Bluetooth antenna (20) and the circuit board (30) are both located between the exterior trim panel (10) and the protective shell (40). The Bluetooth antenna (20) is mounted on a surface of the exterior trim panel (10) facing the protective shell (40). The circuit board (30) is mounted on a surface of the protective shell (40) facing the exterior trim panel (10), and is electrically connected to the Bluetooth antenna (20). For the pillar assembly and the vehicle, the Bluetooth antenna is integrated into the pillar assembly, so that interference and shielding of wireless electromagnetic signals by sheet metal members of a vehicle body are avoided, thereby reducing a risk of electrostatic shock to the Bluetooth antenna during mounting.

## Description

### CROSS-REFERENCE TO RELATED APPLICATION(S)

This application claims priority to Chinese Patent Application No. 2023109929987, filed August 08, 2023, and entitled "PILLAR ASSEMBLY AND VEHICLE", the entire disclosure of which is incorporated herein by reference.

### TECHNICAL FIELD

The disclosure relates to the field of vehicle technology, and more particularly, to a pillar assembly and a vehicle.

### BACKGROUND

At present, Bluetooth digital keys are becoming widely adopted in vehicles in the market, that is, keyless entry into the vehicle or keyless start function of the vehicle is realized mainly with aid of a Bluetooth-enabled mobile phone or wearable Bluetooth device. However, an existing Bluetooth module in the vehicle is susceptible to signal shielding caused by sheet metal members around the vehicle body, resulting in weak Bluetooth signals and unstable Bluetooth functionality.

### SUMMARY

A pillar assembly and a vehicle are provided in the disclosure, to solve a problem that signals of an existing Bluetooth module are susceptible to interference.

In a first aspect, a pillar assembly is provided in the disclosure. The pillar assembly is applied to a vehicle and includes an exterior trim panel, a Bluetooth antenna, a circuit board, and a protective shell. The protective shell is mounted on an inner side of the exterior trim panel and is disposed opposite to the exterior trim panel. The Bluetooth antenna and the circuit board are both located between the exterior trim panel and the protective shell, and the Bluetooth antenna is mounted on a surface of the exterior trim panel facing the protective shell. The circuit board is mounted on a surface of the protective shell facing the exterior trim panel. The circuit board is electrically connected to the Bluetooth antenna.

In an embodiment, the Bluetooth antenna includes an antenna coil, a first protective layer, and a second protective layer. The first protective layer is disposed on the surface of the exterior trim panel facing the protective shell. The antenna coil is disposed on a surface of the first protective layer away from the exterior trim panel. The second protective layer is disposed on a surface of the antenna coil away from the first protective layer.

In an embodiment, the second protective layer completely covers the antenna coil.

In an embodiment, the Bluetooth antenna further includes a protective cover. The protective cover is mounted between the exterior trim panel and the protective shell and covers the antenna coil.

In an embodiment, the antenna coil includes a body and conductive terminals. The conductive terminals are connected to one side of the body. The body is located between the first protective layer and the second protective layer, and the conductive terminals protrude relative to the second protective layer and are electrically connected to the circuit board.

In an embodiment, both the first protective layer and the second protective layer are made of ink. The antenna coil is made of conductive silver paste.

In an embodiment, the Bluetooth antenna further includes a connector. The connector is located between the exterior trim panel and the protective shell and is electrically connected between the Bluetooth antenna and the circuit board.

In an embodiment, the exterior trim panel is made of glass, or glass ceramic.

In an embodiment, the pillar assembly further includes a wire harness. The protective shell defines a wire pass-through hole thereon. The wire harness has one end electrically connected to the circuit board, and has another end passing through the wire pass-through hole and configured to be electrically connected to a control system of the vehicle.

In an embodiment, the pillar assembly further includes an insulating sealing plug. The insulating sealing plug is sleeved around and connected to a periphery of the wire harness. The insulating sealing plug seals the wire pass-through hole.

In a second aspect, a vehicle is further provided in embodiments of the disclosure. The vehicle includes the vehicle pillar assembly and a vehicle body. The vehicle pillar assembly is connected between an upper beam and a lower beam of the vehicle body.

To sum up, in the embodiments of the disclosure, the Bluetooth antenna is integrated into the pillar assembly, so that the Bluetooth antenna stays away from a front bumper, a rear bumper, a left fender, and a right fender, which avoids interference and shielding of wireless electromagnetic signals by sheet metal members of the vehicle body, thereby improving signal gain, stability, and positioning accuracy of the Bluetooth antenna, and on the other hand, reducing the number of mounting points for Bluetooth components and thus reducing usage and maintenance costs. In addition, by mounting and fixing the circuit board inside the protective shell, the circuit board can be kept away from sheet metal members of the pillar assembly, which reduces signal interference on the Bluetooth antenna by the sheet metal members and reduces risk of electrostatic shock to the Bluetooth antenna during mounting.

### BRIEF DESCRIPTION OF THE DRAWINGS

In order to describe more clearly technical solutions of the disclosure, the following will give a brief introduction to the accompanying drawings used for describing implementations. Apparently, the accompanying drawings described below are some implementations of the disclosure. Based on these drawings, those of ordinary skill in the art can also obtain other drawings without creative effort.
FIG. 1 is a schematic structural view of a vehicle provided in the disclosure.
FIG. 2 is a schematic structural view of a pillar assembly provided in embodiments of the disclosure.
FIG. 3 is a schematic cross-sectional view of the pillar assembly illustrated in FIG. 2, taken along A-A.
FIG. 4 is a schematic structural view of a Bluetooth low energy (BLE) antenna module mounted on an exterior trim panel illustrated in FIG. 2.
FIG. 5 is a schematic view of a layered structure of the pillar assembly illustrated in FIG. 2.
FIG. 6 is a schematic simulation view of a Bluetooth antenna in a pillar assembly in Embodiment 1.
FIG. 7 is a schematic view of antenna gain values of the pillar assembly in Embodiment 1.
FIG. 8 is a horizontal-plane coverage lobe pattern of an antenna in the pillar assembly in Embodiment 1.
FIG. 9 is a lobe pattern of antenna gain values of the pillar assembly in Embodiment 1.
FIG. 10 is a view of antenna efficiency of the pillar assembly in Embodiment 1.

### DETAILED DESCRIPTION

The following will describe technical solutions of embodiments of the disclosure clearly and completely with reference to the accompanying drawings in the embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

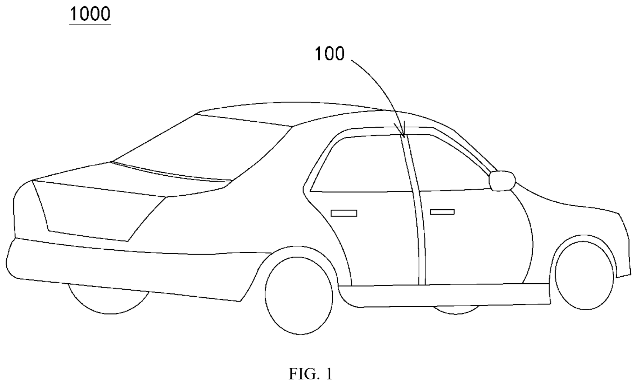

Reference can be made to FIG. 1, which is a schematic structural view of a vehicle 1000 provided in the disclosure.

The vehicle 1000 includes a pillar assembly 100. The pillar assembly 100 is connected between an upper beam and a lower beam of the vehicle 1000. In addition, the pillar assembly 100 is typically provided with an exterior trim member at one side of the pillar assembly 100 facing the exterior of the vehicle 1000, and the exterior trim member is used for decorative purposes or an intelligent component with practical functions. The pillar assembly 100 may be a A-pillar, a B-pillar, or a C-pillar for a vehicle body. Illustration of embodiments of the disclosure will be given below by taking the B-pillar for the vehicle body as an example of the pillar assembly 100. In addition, the pillar assembly 100 in embodiments of the disclosure is provided with an intelligent component having Bluetooth low energe (BLE) functionality, which can realize keyless entry or keyless start function of the vehicle.

The terms of orientation, such as "inner" and "outer", mentioned in the illustration of embodiments of the disclosure are described based on the orientation illustrated in FIG. 1, where "inner" refers to the direction toward the interior of the vehicle 1000, and "outer" refers to the direction toward the exterior of the vehicle 1000. These terms do not impose limitation on the vehicle 1000 in practical application scenarios.

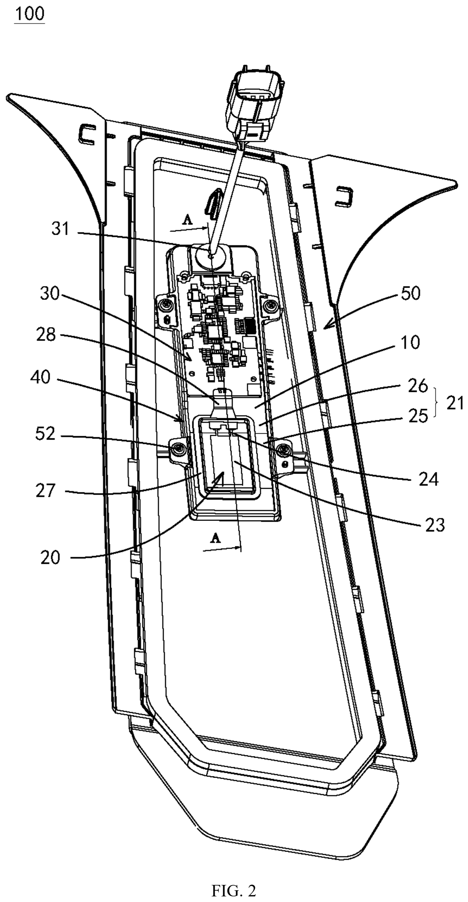

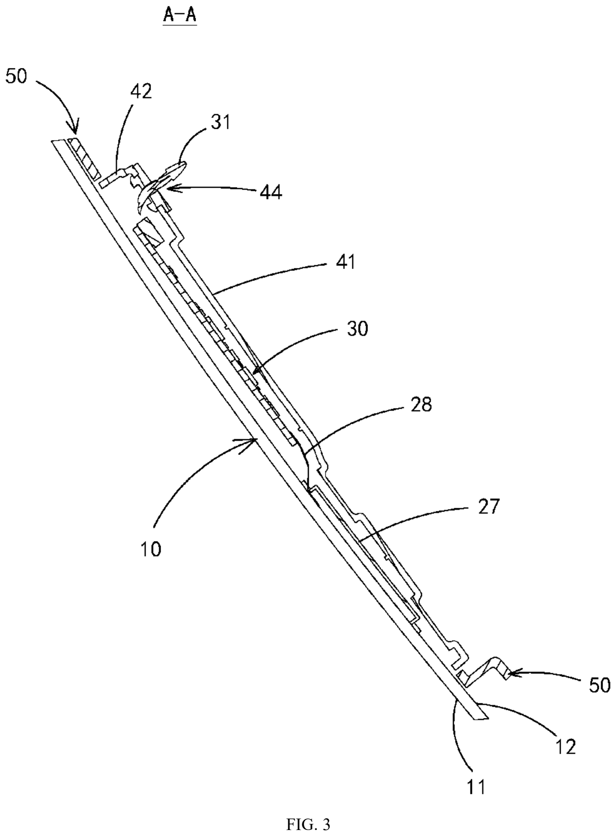

Reference can be made to FIG. 2 and FIG. 3, where FIG. 2 is a schematic structural view of a pillar assembly 100 provided in embodiments of the disclosure, and FIG. 3 is a schematic cross-sectional view of the pillar assembly 100 illustrated in FIG. 2, taken along A-A.

The pillar assembly 100 includes an exterior trim panel 10, a Bluetooth antenna 20, a circuit board 30, and a protective shell 40. The Bluetooth antenna 20 is mounted and fixed on one side of the exterior trim panel 10 facing the interior of the vehicle 1000. The circuit board 30 is fixed within the protective shell 40. The protective shell 40 covers the Bluetooth antenna 20 and is fixedly connected to the exterior trim panel 10. The circuit board 30 is located between the protective shell 40 and the exterior trim panel 10 and is electrically connected to the Bluetooth antenna 20.

As illustrated in FIG. 3, the exterior trim panel 10 has an outer surface 11 and an inner surface 12. The outer surface 11 and the inner surface 12 are arranged opposite to each other in the thickness direction of the exterior trim panel 10. The outer surface 11 faces the exterior of the vehicle 1000, and the inner surface 12 faces the interior of the vehicle 1000. In this embodiment, the exterior trim panel 10 is a glass exterior trim panel. The exterior trim panel 10 may be made of glass, such as soda-lime glass, alkali-aluminosilicate glass, alkali-containing borosilicate glass, and/or alkali-alumino-borosilicate glass. Alternatively, the exterior trim panel 10 may be made of glass-ceramic, such as lithium oxide (Li₂O)-aluminum oxide (Al₂O₃)-silicon dioxide (SiO₂) (LAS) glass-ceramic, magnesium oxide (MgO)-Al₂O₃-SiO₂ (MAS) glass-ceramic, or glass-ceramic containing crystalline phase, where the crystalline phase is any one or more of: mullite, spinel, α-quartz, β-quartz solid solution, petalite, lithium disilicate, β-spodumene, nepheline, and aluminium oxide. In addition, the glass exterior trim panel can undergo chemical strengthening, thermal strengthening, mechanical strengthening, or a combination thereof. In other embodiments, the exterior trim panel 10 may be a plastic exterior trim panel.

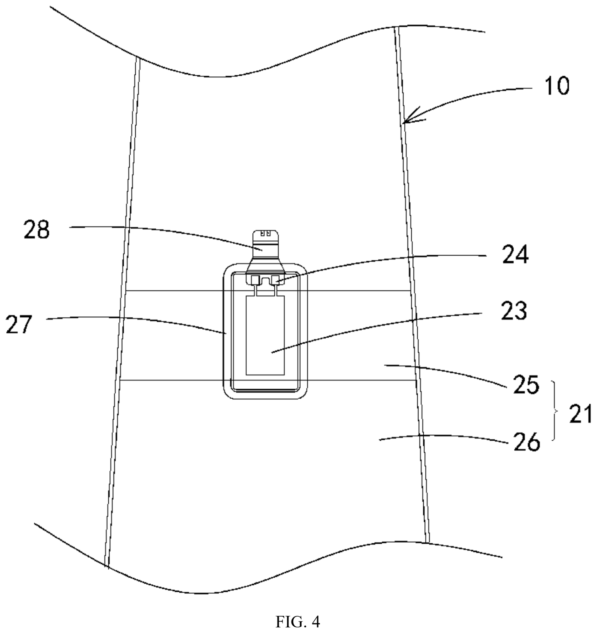

Reference can be made to FIG. 4, which is a schematic structural view of the Bluetooth antenna 20 mounted on the exterior trim panel 10 illustrated in FIG. 2.

The Bluetooth antenna 20 is mounted and fixed to the inner surface 12 of the exterior trim panel 10. The Bluetooth antenna 20 includes a protective member 21, an antenna element 22, a protective cover 27, and a connector 28. The antenna element 22 is mounted and fixed to the protective member 21. The protective member 21 is mounted and fixed to the inner surface 12 of the exterior trim panel 10. The connector 28 is fixedly connected to the inner surface 12 of the exterior trim panel 10 and is spaced apart from the protective member 21, and the connector 28 is connected to the antenna element 22. The protective cover 27 covers the antenna element 22, a part of the protective member 21, and a part of the connector 28, and is fixedly connected to the inner surface 12 of the exterior trim panel 10.

In this embodiment, the antenna element 22 is made of conductive silver paste. The antenna element 22 includes a body 23 and two conductive terminals 24. The body 23 is substantially in a shape of rectangular block. The body 23 has a length greater than or equal to 30 millimeters (mm) and less than or equal to 50 mm, and has a width greater than or equal to 10 mm and less than or equal to 15 mm. The body 23 has an area greater than or equal to 300 square millimeters (mm²) and less than or equal to 750 mm², which is the product of the length and the width of the body 23. The length of the body 23 refers to the size of the body 23 in the length direction of the exterior trim panel 10. In other embodiments, the body 23 may be in a shape of square, circle, ellipse, etc., which is not specifically limited herein. The two conductive terminals 24 are connected to one side of the body 23 and protrude from the body 23, and the two conductive terminals 24 are spaced apart from each other.

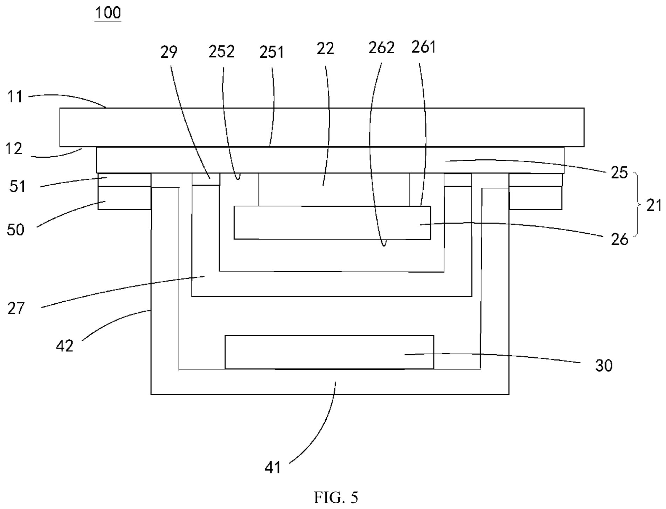

Reference can be made to FIG. 4 and FIG. 5 together, where FIG. 5 is a schematic view of a layered structure of the pillar assembly 100 illustrated in FIG. 2.

The protective member 21 is used to protect the body 23 from dust, moisture, and electrostatic influences. In this embodiment, the protective member 21 has a layered structure and includes a first protective layer 25 and a second protective layer 26. In the thickness direction of the pillar assembly 100, the second protective layer 26 and the first protective layer 25 are stacked and fixed. The first protective layer 25 is connected to the inner surface 12 of the exterior trim panel 10. The second protective layer 26 is disposed on one side of the first protective layer 25 away from the exterior trim panel 10. The body 23 is disposed and fixed between the first protective layer 25 and the second protective layer 26, and the two conductive terminals 24 exceed the second protective layer 26.

The first protective layer 25 has a first surface 251 and a second surface 252. The first surface 251 and the second surface 252 are arranged opposite to each other in the thickness direction of the first protective layer 25. The first surface 251 is arranged facing towards the inner surface 12, and the second surface 252 faces away from the inner surface 12. The second protective layer 26 has a third surface 261 and a fourth surface 262. The third surface 261 and the fourth surface 262 are arranged opposite to each other in the thickness direction of the second protective layer 26. The third surface 261 is arranged facing towards the second surface 252, and the fourth surface 262 faces away from the second surface 252. The body 23 is disposed and fixed between the second surface 252 and the third surface 261. The first protective layer 25 and the second protective layer 26 are used to protect the body 23 from dust, contamination, or oxidation, thereby preventing signal attenuation in the body 23.

As illustrated in FIG. 4, in this embodiment, the protective member 21 is an ink layer. That is, both the first protective layer 25 and the second protective layer 26 each are an ink coating. Preferably, the ink is black. The black ink layer can conceal structures and components located on the inner side of the exterior trim panel 10, thereby improving aesthetics of the pillar assembly 100. The first protective layer 25 is connected to the inner surface 12 of the exterior trim panel 10 and covers the inner surface 12 to conceal the structures and components located on the inner side of the exterior trim panel 10. The body 23 is connected to the second surface 252 of the first protective layer 25. The second protective layer 26 is disposed on one side of the first protective layer 25 away from the exterior trim panel 10 and completely covers the body 23 and a part of the conductive terminals 24. It can be understood that, the body 23 is disposed and fixed between the second surface 252 of the first protective layer 25 and the third surface 261 of the second protective layer 26. The two conductive terminals 24 are fixedly connected to the second surface 252 of the first protective layer 25, and the conductive terminals 24 exceed the second protective layer 26 for electrical connection to the circuit board 30. It can be understood that, the first protective layer 25 and the second protective layer 26 can protect the body 23 from dust, moisture, and electrostatic influences.

In this embodiment, the preparation process for forming the protective member 21 and the antenna element 22 on the exterior trim panel 10 is as follows. Firstly, the first protective layer 25 is formed on the inner surface 12 of the exterior trim panel 10 through a first printing process (printing ink). Then, the antenna element 22 is formed on the second surface 252 of the first protective layer 25 through a second printing process (printing conductive silver paste). Finally, the second protective layer 26 is formed on the second surface 252 of the first protective layer 25 through a third printing process (printing ink), and covers the body 23 and a part of the conductive terminal 24. Since the ink layer can undergo high-temperature sintering after printing, the sintered ink can form a firm bond with the glass exterior trim panel, thereby fixing the Bluetooth antenna 20 to the inner surface 12 of the exterior trim panel 10.

In an embodiment, the protective member 21 may be an insulating film. That is, the first protective layer 25 and the second protective layer 26 each are an insulating film. In this embodiment, the first protective layer 25 is connected to the inner surface 12 of the exterior trim panel 10. The second protective layer 26 covers the first protective layer 25 on the side of the first protective layer 25 away from the exterior trim panel 10. The body 23 is coated between the first protective layer 25 and the second protective layer 26. Specifically, the third surface 261 of the second protective layer 26 is connected to the second surface 252 of the first protective layer 25, and the body 23 is fixed between the second surface 252 of the first protective layer 25 and the third surface 261 of the second protective layer 26. The two conductive terminals 24 exceed the first protective layer 25 and the second protective layer 26 for electrical connection to the circuit board 30. Exemplarily, if the exterior trim panel 10 is a plastic exterior trim panel, the protective member 21 and the plastic exterior trim panel may be integrally injection-molded, and thus is fixedly connected to the inner surface 12 of the plastic exterior trim panel 10.

The connector 28 is made of a conductive material and is used for electricity conduction and signal transmission between the antenna element 22 and the circuit board 30. The connector 28 is fixedly connected to the exterior trim panel 10. The connector 28 may be directly adhered to the inner surface 12 of the exterior trim panel 10, or may be adhered to the second surface 252 of the first protective layer 25. The connector 28 is located at one side of the antenna element 22 and is connected to the two conductive terminals 24 respectively.

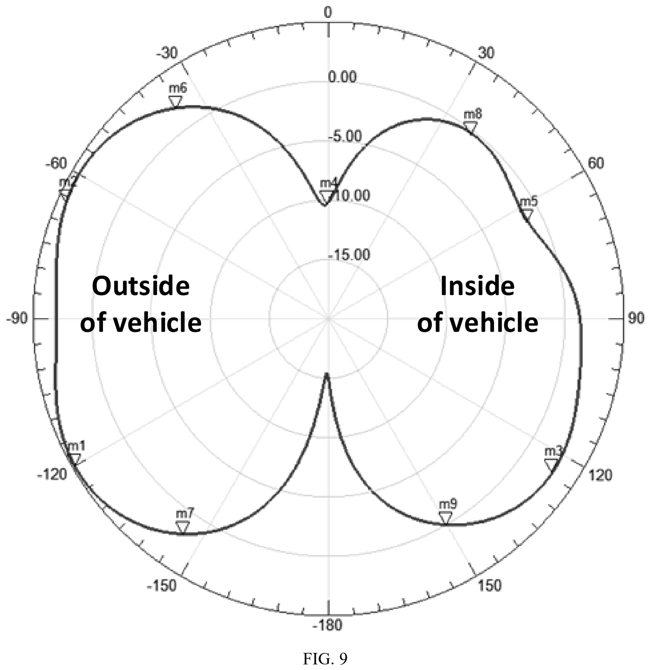

In this embodiment, the protective cover 27 is substantially a rectangular cover. In this embodiment, the protective cover 27 is made of glass. In other embodiments, the protective cover 27 may be formed through plastic injection molding or rubber extrusion. The protective cover 27 covers the antenna element 22, a part of the protective member 21, and a part of the connector 28, and is fixedly connected to the second surface 252 of the first protective layer 25. The protective cover 27 and the exterior trim panel 10 cooperatively define a sealing cavity that is waterproof, dustproof, and anti-oxidation, so as to protect the antenna element 22 accommodated in the sealing cavity from moisture, dust, oxidation, and stress pulling, etc. In some embodiments, as illustrated in FIG. 9, a first adhesive member 29 is provided between the protective cover 27 and the second surface 252 of the first protective layer 25. The first adhesive member 29 may be an ultraviolet (UV) curing adhesive or a double-sided foam tape, etc. The protective cover 27 is fixedly connected to the first protective layer 25 by the first adhesive member 29.

Reference can continue to be made to FIG. 3 and FIG. 5. The protective shell 40 covers the Bluetooth antenna 20 and is fixedly connected to the exterior trim panel 10, thereby encapsulating the Bluetooth antenna 20. In this embodiment, the protective shell 40 is substantially a rectangular cover body and includes a base wall 41 and side walls 42. The side walls 42 are disposed around the periphery of the base wall 41 on one side of the base wall 41. The protective shell 40 covers the Bluetooth antenna 20. In the thickness direction of the pillar assembly 100, the base wall 41 is located at one side of the Bluetooth antenna 20 away from the exterior trim panel 10, and is arranged opposite to and spaced apart from the Bluetooth antenna 20. The side walls 42 surround the Bluetooth antenna 20 and are spaced apart from the Bluetooth antenna 20. The base wall 41 and the side walls 42 of the protective shell 40, together with the exterior trim panel 10, cooperatively define a sealing cavity that is waterproof, dustproof, and anti-electrostatic, so as to protect the Bluetooth antenna 20 accommodated in the sealing cavity. The protective shell also defines a wire pass-through hole 44 thereon. The wire pass-through hole 44 is defined on the base wall 41 of the protective shell 40 and extends through the base wall 41 in the thickness direction of the base wall 41.

In some embodiments, a second adhesive member (not illustrated in the figures) is provided between a surface of the side wall 42 away from the base wall 41 and the inner surface 12 of the exterior trim panel 10. The second adhesive member may be a polyurethane (PU) adhesive or a double-sided foam tape, etc. That is, the protective shell 40 can be directly fixed and adhered to the inner surface 12 of the exterior trim panel 10 or the second surface 252 of the first protective layer 25 by the second adhesive member.

The circuit board 30 is fixedly connected to a surface of the base wall 41 of the protective shell 40 facing the exterior trim panel 10, and is located between the side walls 42 of the protective shell 40 and is spaced apart from the side walls 42. Here, the circuit board 30 can be fixedly connected to the base wall 41 in various manners such as screw fastening, thermal welding, or adhesive bonding. The circuit board 30 is spaced apart from the Bluetooth antenna 20 and the exterior trim panel 10. The circuit board 30 is connected to an end of the connector 28 away from the conductive terminals 24. An electrical and signal connection is established between the circuit board 30 and the antenna element 22 through the connector 28. Here, the circuit board 30 can be plug-connected to the connector 28 through wires or flexible printed circuit (FPC) cables to achieve electrical and signal connection with the antenna element 22. The pillar assembly 100 further includes a wire harness(es) 31 and an insulating sealing plug. The wire harness 31 has one end electrically connected to the circuit board 30, and has the other end passing through the wire pass-through hole 44 defined on the base wall 41 of the protective shell 40 and out of the protective shell 40, thereby establishing the electrical and signal connection with a control system of the vehicle 1000. The insulating sealing plug is sleeved around and connected to the periphery of the wire harness 31. It can be understood that, after the wire harness 31 from the circuit board 30 passes through the wire pass-through hole 44 and out of the protective shell 40, the insulating sealing plug seals the wire pass-through hole 44, thereby ensuring sealing of the sealing cavity and insulation between the wire harnesses. In this embodiment, the circuit board 30 is accommodated in the sealing cavity defined by the protective shell 40 and the exterior trim panel 10, thereby protecting the circuit board 30 from moisture, dust, and electrostatic influences. In addition, the Bluetooth antenna 20 and the circuit board 30 are structurally separate from each other. The Bluetooth antenna 20 is fixedly connected to the exterior trim panel 10, while the circuit board 30 is fixedly connected inside the protective shell 40.

In this embodiment, the pillar assembly 100 further includes a base plate 50. The base plate 50 is substantially in the shape of thin plate and is fixedly connected to the exterior trim panel 10. In this embodiment, a third adhesive member 51 is provided between a surface of the base plate 50 facing the exterior trim panel 10 and the second surface 252 of the first protective layer 25. The third adhesive member 51 may be PU adhesive or a double-sided foam tape, etc. The base plate 50 is fixedly connected to the first protective layer 25 by the third adhesive member 51. In other embodiments, the base plate 50 may be directly connected to the inner surface 12 of the exterior trim panel 10 via the third adhesive member 51, which is not specifically limited herein. The base plate 50 surrounds the protective shell 40 and is fixedly connected to the side walls 42. The base plate 50 is fixedly connected to a body sheet metal of the vehicle at one side of the base plate 50 away from the protective shell 40. In this embodiment, the base plate 50 is fixedly connected to the side walls 42 of the protective shell 40 by self-tapping screws 52. In other embodiments, the base plate 50 may be fixedly connected to the side walls 42 of the protective shell 40 by means of snap-fit engagement using a clamping jaw. It can be understood that, the protective shell 40 is fixedly connected to the exterior trim panel 10 through the base plate 50, and the protective shell 40 and the exterior trim panel 10 cooperatively define the sealing cavity to protect the circuit board 30 and the Bluetooth antenna 20.

In embodiments of the disclosure, the Bluetooth antenna 20 is integrated into the pillar assembly 100, so that the Bluetooth antenna 20 stays away from a front bumper, a rear bumper, a left fender, and a right fender, which avoids interference and shielding of wireless electromagnetic signals by sheet metal members of the vehicle body, thereby improving signal gain, stability, and positioning accuracy of the Bluetooth antenna 20, and on the other hand, reducing the number of mounting points for Bluetooth components and thus reducing usage and maintenance costs. In addition, in the embodiments, the circuit board 30 and the Bluetooth antenna 20 are designed in a split manner, and the antenna element 22 mounted inside the protective member 21 can be electrically connected to various structures or models of circuit boards 30, so that the circuit board 30 and Bluetooth antenna 20 that are designed in a split manner can adapt to pillar assemblies 100 with different spatial structures, and the versatility is high. Moreover, in the embodiments, the circuit board 30 and the Bluetooth antenna 20 are arranged in a stacked manner, thereby avoiding drawbacks of an integrated Bluetooth module such as excessive space occupation, squeezing of the mounting space for other components, and weakening of the strength of side sheet metal of the pillar assembly. Furthermore, by mounting and fixing the circuit board 30 inside the protective shell 40, the circuit board 30 can be kept away from sheet metal members of the pillar assembly 100, which reduces signal interference on the Bluetooth antenna 20 by the sheet metal members and reduces risk of electrostatic shock to the Bluetooth antenna 20 during mounting.

Next, a comparative analysis is conducted with regard to simulated antenna radiation performance of pillar assemblies 100 in multiple embodiments and comparative examples.

### Embodiment 1

In Embodiment 1, the structure of the pillar assembly 100 is the same as that described in the foregoing embodiments. The body 23 of the antenna element 22 has a length of 30 mm, a width of 10 mm, and an area of 300 mm².

### Embodiment 2

In Embodiment 2, the structure of the pillar assembly 100 is the same as that in Embodiment 1. The body 23 of the antenna element 22 has a length of 35 mm, a width of 11 mm, and an area of 385 mm².

### Embodiment 3

In Embodiment 3, the structure of the pillar assembly 100 is the same as that in Embodiment 1. The body 23 of the antenna element 22 has a length of 40 mm, a width of 12 mm, and an area of 480 mm².

### Embodiment 4

In Embodiment 4, the structure of the pillar assembly 100 is the same as that in Embodiment 1. The body 23 of the antenna element 22 has a length of 45 mm, a width of 13 mm, and an area of 585 mm².

### Comparative Example 1

In Comparative Example 1, the structure of the pillar assembly 100 is the same as that in Embodiment 1. The body 23 of the antenna element 22 has a length of 60 mm, a width of 10 mm, and an area of 600 mm².

### Comparative Example 2

In Comparative Example 2, the structure of the pillar assembly 100 is the same as that in Embodiment 1. The body 23 of the antenna element 22 has a length of 30 mm, a width of 20 mm, and an area of 600 mm².

### Comparative Example 3

In Comparative Example 3, the structure of the pillar assembly 100 is the same as that in Embodiment 1. The body 23 of the antenna element 22 has a length of 30 mm, a width of 30 mm, and an area of 600 mm².

Antenna simulation is performed on the pillar assemblies 100 in Embodiments 1 to 4 and Comparative Examples 1~3. Data in Table 1 indicates performance simulation results.

**Table 1: Simulation results for pillar assemblies in Embodiments and Comparative Examples**

| Serial number of pillar assembly | Length of body (mm) | Width of body (mm) | Area of body (mm²) | Horizontal lobe angle outside vehicle (degrees) | Horizontal lobe angle inside vehicle (degrees) | Antenna gain (decibels relative to isotropic (dBi)) |
|---|---|---|---|---|---|---|
| Embodiment 1 | 30 | 10 | 300 | 110 | 80 | 4.8 |
| Embodiment 2 | 35 | 11 | 385 | 105 | 85 | 4.7 |
| Embodiment 3 | 40 | 12 | 480 | 100 | 90 | 4.3 |
| Embodiment 4 | 45 | 13 | 585 | 90 | 95 | 4 |
| Comparative Example 1 | 60 | 10 | 600 | 88 | 100 | 3.8 |
| Comparative Example 2 | 30 | 20 | 600 | 85 | 105 | 3.5 |
| Comparative Example 3 | 30 | 30 | 900 | 80 | 110 | 3.3 |

As can be seen from Table 1, from Embodiment 1 to Embodiment 4, the length of the body gradually increases from 30 mm to 45 mm, and the width of the body gradually increases from 10 mm to 13 mm. The horizontal lobe angle of the pillar assembly outside the vehicle gradually decreases from 110 degrees to 90 degrees, and the horizontal lobe angle inside the vehicle gradually increases from 80 degrees to 95 degrees. The antenna gain of the pillar assembly gradually decreases from 4.8 dBi to 4 dBi. Here, the antenna gain refers to the ratio of the power density of the signal generated by the actual antenna module to that generated by an ideal radiation element at the same point in space, under the condition of equal input power. Antenna gain quantitatively describes the concentration of the antenna's radiation. Under the same conditions, a higher antenna gain (dBi) results in a wider coverage range and a longer transmission distance for the wireless signal. From the above, it can be seen that the antenna gain of the pillar assemblies in Embodiments 1-4 ranges from 4 dBi to 5 dBi, the horizontal lobe angle outside the vehicle ranges from 90 degrees to 110 degrees, and the horizontal lobe angle inside the vehicle ranges from 80 degrees to 100 degrees. Therefore, when the length of the body 23 is greater than or equal to 30 mm and less than or equal to 50 mm, and the width of the body 23 is greater than or equal to 10 mm and less than or equal to 15 mm, the simulated antenna performance of the pillar assembly is excellent.

Compared to Embodiment 1, the body length in Comparative Example 1 increases to 60 mm, the horizontal lobe angle outside the vehicle decreases to 88 degrees, the horizontal lobe angle inside the vehicle increases to 100 degrees, and the antenna gain decreases to 3.8 dBi. The antenna performance of the pillar assembly in Comparative Example 1 is significantly degraded. Compared to Embodiment 1, the body width in Comparative Example 2 increases to 20 mm, the horizontal lobe angle outside the vehicle decreases to 85 degrees, the horizontal lobe angle inside the vehicle increases to 105 degrees, and the antenna gain decreases to 3.5 dBi. The antenna performance of the pillar assembly in Comparative Example 2 is significantly degraded. Compared to Embodiment 1, the body width in Comparative Example 3 further increases to 30 mm, the horizontal lobe angle outside the vehicle further decreases to 80 degrees, the horizontal lobe angle inside the vehicle increases to 110 degrees, and the antenna gain decreases to 3.3 dBi. The antenna performance of the pillar assembly in Comparative Example 3 is further degraded.

To sum up, by comparing and analyzing the simulated antenna performance of the pillar assemblies in Embodiments 1-4 and Comparative Examples 1-3, it is concluded that the antenna performance of the pillar assembly is relatively excellent when the length of the body 23 is greater than or equal to 30 mm and less than or equal to 50 mm, and the width of the body 23 is greater than or equal to 10 mm and less than or equal to 15 mm. The simulated performance of the pillar assembly will be described below using Embodiment 1 as an example.

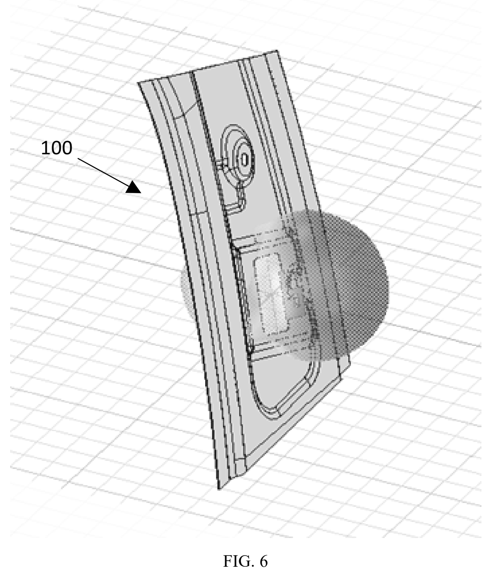

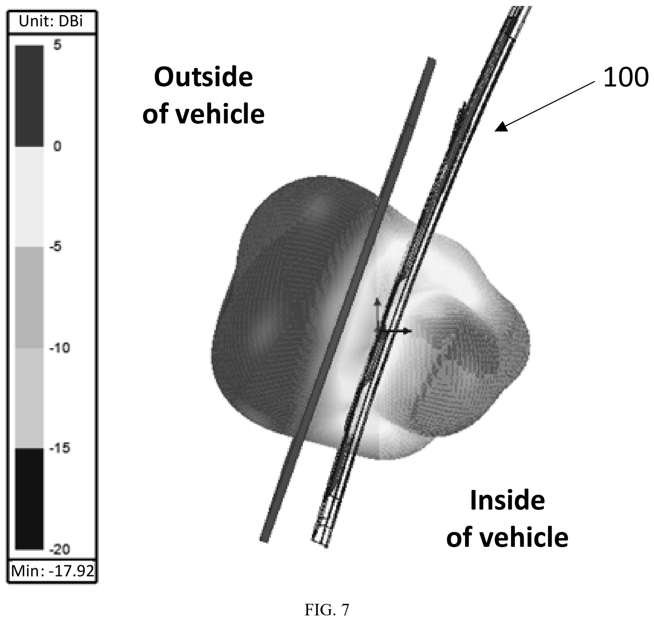

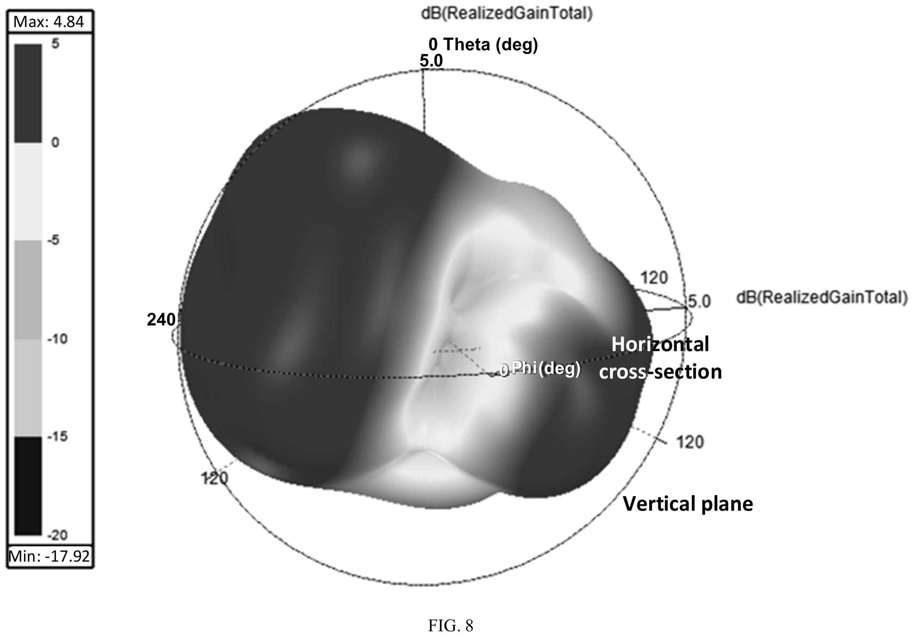

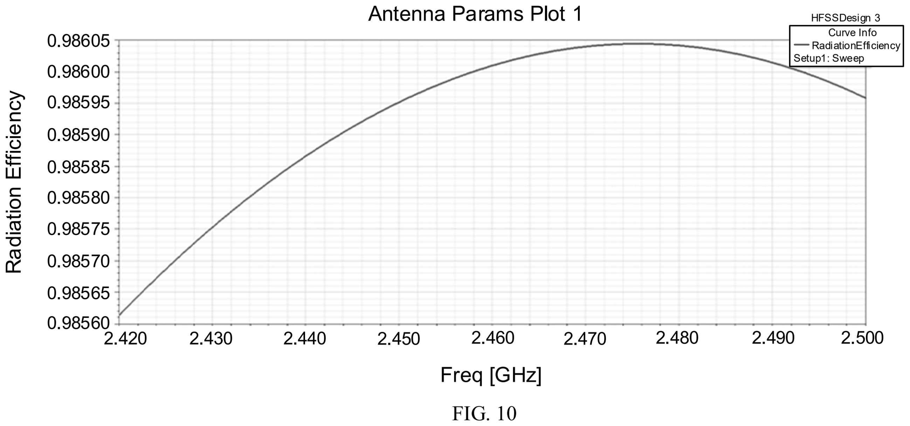

Reference can be made to FIG. 6 to FIG. 10, where FIG. 6 is a schematic simulation view of a Bluetooth antenna in a pillar assembly 100 in Embodiment 1, FIG. 7 is a schematic view of antenna gain values of the pillar assembly 100 in Embodiment 1, FIG. 8 is a horizontal-plane coverage lobe pattern of an antenna in the pillar assembly 100 in Embodiment 1, FIG. 9 is a lobe pattern of antenna gain values of the pillar assembly 100 in Embodiment 1, and FIG. 10 is a view of antenna efficiency of the pillar assembly 100 in Embodiment 1

Reference can be made to FIG. 7 to FIG. 9 together. FIG. 8 shows Bluetooth signal coverage around the pillar assembly 100, specifically showing lobe coverage in the horizontal plane from 0 degrees to 120 degrees, then to 240 degrees, and finally back to 0 degrees, as well as lobe coverage in the vertical plane from 0 degrees to 120 degrees, then to 240 degrees, and finally back to 0 degrees. The gain of the Bluetooth antenna around the pillar assembly 100 is shown in FIG. 9. In FIG. 9, the antenna gain at the center of the circle represents -20 dBi, and the antenna gain at the outermost of the circle represents 5 dBi. The antenna gain of the part of the pillar assembly 100 outside the vehicle is 4.8 dBi. The width of the coverage lobe having a gain of 4 dBi or more in the horizontal plane outside the vehicle is 110 degrees. The width of the coverage lobe having a gain of 0 dBi or more in the horizontal plane inside the vehicle is 80 degrees.

It can be seen from the described FIG. 6 to FIG. 9 that in the embodiments of the disclosure, the Bluetooth antenna 20 is integrated into the pillar assembly 100, the antenna gain of the Bluetooth antenna 20 is significantly improved, and the signal strength of the Bluetooth antenna 20 is enhanced.

Furthermore, as illustrated in FIG. 10, in the frequency range of 2.42 G to 2.50 G, the antenna efficiency values of the pillar assembly 100 provided in the embodiments of the disclosure are all greater than 98%, and the stability of the Bluetooth signal is relatively strong, thereby indicating the following. The Bluetooth antenna 20 is integrated into the pillar assembly 100, so that the Bluetooth antenna stays away from the front bumper, the rear bumper, the left fender, and the right fender of the vehicle 1000, thereby avoiding interference and shielding of wireless electromagnetic signals by sheet metal members of the vehicle body. In addition, the Bluetooth antenna 20 and the circuit board are designed in a split manner, so that the Bluetooth antenna 20 stays away from the metal sheet-metal members, thereby reducing the signal interference of the metal sheet-metal members on the Bluetooth antenna 20, which is conducive to improving stability and positioning accuracy of the Bluetooth signal.

The embodiments of the disclosure are described in detail above. Specific examples are used in this specification to describe the principle and implementations of the disclosure. The description of the embodiments is only used to help understand the method and core ideas of the disclosure. Meanwhile, those of ordinary skill in the art may make modifications to the specific implementations and application scopes according to the idea of the disclosure. In conclusion, the content of the specification shall not be construed as a limitation to the disclosure.

## Claims

1. A pillar assembly, applied to a vehicle and comprising an exterior trim panel, a Bluetooth antenna, a circuit board, and a protective shell, wherein
the protective shell is mounted on an inner side of the exterior trim panel and is disposed opposite to the exterior trim panel;
the Bluetooth antenna and the circuit board are both located between the exterior trim panel and the protective shell, and the Bluetooth antenna is mounted on a surface of the exterior trim panel facing the protective shell; and
the circuit board is mounted on a surface of the protective shell facing the exterior trim panel, and the circuit board is electrically connected to the Bluetooth antenna.

2. The pillar assembly of claim 1, wherein the Bluetooth antenna comprises an antenna coil, a first protective layer, and a second protective layer, wherein
the first protective layer is disposed on the surface of the exterior trim panel facing the protective shell, the antenna coil is disposed on a surface of the first protective layer away from the exterior trim panel, and the second protective layer is disposed on a surface of the antenna coil away from the first protective layer.

3. The pillar assembly of claim 2, wherein the second protective layer completely covers the antenna coil.

4. The pillar assembly of claim 2, wherein the Bluetooth antenna further comprises a protective cover, and the protective cover is mounted between the exterior trim panel and the protective shell and covers the antenna coil.

5. The pillar assembly of claim 2, wherein the antenna coil comprises a body and conductive terminals, and the conductive terminals are connected to one side of the body, the body is located between the first protective layer and the second protective layer, and the conductive terminals protrude relative to the second protective layer and are electrically connected to the circuit board.

6. The pillar assembly of claim 5, wherein the body has a length greater than or equal to 30 millimeters (mm) and less than or equal to 50 mm, and the body has a width greater than or equal to 10 mm and less than or equal to 15 mm.

7. The pillar assembly of claim 1, wherein the Bluetooth antenna further comprises a connector, and the connector is located between the exterior trim panel and the protective shell and is electrically connected between the Bluetooth antenna and the circuit board.

8. The pillar assembly of claim 2, wherein the first protective layer and the second protective layer each are an insulating film, and the antenna coil is made of conductive silver paste and coated between the first protective layer and the second protective layer.

9. The pillar assembly of claim 2, wherein both the first protective layer and the second protective layer are made of ink, and the antenna coil is made of conductive silver paste.

10. The pillar assembly of any of claims 1 to 9, wherein the exterior trim panel is made of glass, or glass ceramic, or plastic.

11. The pillar assembly of claim 8, wherein the exterior trim panel is made of plastic, and the first protective layer, the second protective layer, and the exterior trim panel are integrally injection-molded.

12. The pillar assembly of claim 1, further comprising a wire harness, wherein the protective shell defines a wire pass-through hole thereon, and the wire harness has one end electrically connected to the circuit board, and has another end passing through the wire pass-through hole and configured to be electrically connected to a control system of the vehicle.

13. The pillar assembly of claim 12, further comprising an insulating sealing plug, wherein the insulating sealing plug is sleeved around and connected to a periphery of the wire harness, and the insulating sealing plug seals the wire pass-through hole.

14. A vehicle, comprising the pillar assembly of any of claims 1 to 13 and a vehicle body, wherein the pillar assembly is connected between an upper beam and a lower beam of the vehicle body.
